# EUROPÄISCHE PATENTSCHRIFT

(11) **EP 4 239 279 B1**
(45) Veröffentlichungstag und Bekanntmachung des Hinweises auf die Patenterteilung: **20.08.2025**
(21) Anmeldenummer: 22160250.1
(22) Anmeldetag: 04.03.2022
(51) Int. Cl.: G01B 5/00, G01B 21/20

(54) **SYSTEM UND VERFAHREN ZUM PRÜFEN EINER OBERFLÄCHE EINES LUFT- ODER RAUMFAHRZEUGS**
SYSTEM AND METHOD FOR TESTING A SURFACE OF AN AIRCRAFT OR SPACECRAFT
SYSTÈME ET PROCÉDÉ DE VÉRIFICATION D'UNE SURFACE D'UN AÉRONEF OU D'UN VAISSEAU SPATIAL

(43) Veröffentlichungstag der Anmeldung: 06.09.2023
(73) Patentinhaber: Airbus Operations GmbH, 21129 Hamburg (DE)
(72) Erfinder: Goehlich, Robert Alexander, 21129 Hamburg (DE); Hauser, Clara Marie, 21129 Hamburg (DE); Bädker, Michel, 21129 Hamburg (DE)

(56) Entgegenhaltungen:
- FR-A1- 3 045 828
- US-A1- 2010 122 444
- US-A1- 2016 377 424
- US-A1- 2020 346 668

## Beschreibung

### Technisches Gebiet

Die vorliegende Beschreibung betrifft ein System und ein Verfahren zum Prüfen einer Oberfläche eines Luft- oder Raumfahrzeugs

### Technischer Hintergrund

Bei der Herstellung von Rumpfstrukturen, beispielsweise für Luft- oder Raumfahrzeuge, werden hohe Anforderungen an die Oberflächenqualität gestellt. Weist der Rumpf etwa Nietverbindungen auf, ist es üblich, die Qualität der Nietverbindungen durch Sicht- und/oder Tastprüfung zu untersuchen und punktuell mit Messwerkzeugen einer Messung zu unterziehen. Hierzu könnten einzelne Nietverbindungen seitlich beleuchtet und anhand eines Schattenbildes untersucht werden, ob sich ein Niet zu tief oder zu hoch in einer Bohrung befindet. Zudem könnte mit einem Finger über einen Niet gefahren werden und/oder eine Messuhr benutzt werden, um hervorstehende oder tiefliegende Kanten festzustellen.

Weiterhin sind Oberflächenabtastvorrichtungen bekannt, die durch Lichtprojektion und Bilderfassung einen begrenzten Oberflächenabschnitt auf bestimmte Charakteristika untersuchen können. Diese Vorrichtungen könnten handgehalten sein und einen Schaumstoffrahmen aufweisen, der auf einen zu untersuchenden Oberflächenabschnitt gelegt wird, um anschließend eine optische Erfassung der durch den Schaumstoffrahmen umschlossenen Fläche durchzuführen. Werden Formabweichungsstellen identifiziert, könnten Informationen hierzu auf einem Datenträger abgelegt werden. Dies geschieht insbesondere in Form von Bildinformationen, in denen etwaige Formabweichungsstellen entsprechend markiert sind.

Für die Untersuchung längerer Nietreihen an einem Rumpf eines Luft- oder Raumfahrzeugs, die mehrere Hundert Nietverbindungen oder mehr umfassen, ist eine solche Untersuchung sehr aufwendig. Während die Tast- und Sichtprüfung das manuelle Notieren von Informationen erfordert, führt die Benutzung der obigen Oberflächenabtastvorrichtung ebenso nicht zu einer signifikanten Erleichterung, da die Vorrichtung stets manuell von einem Oberflächenabschnitt auf den nächsten, benachbarten Oberflächenabschnitt gesetzt werden muss, um anschließend die Erfassungssequenz auszuführen. Daraus folgt eine große Menge an Bildinformationen auf einem Datenträger, die anschließend aufwendig auszuwerten ist. Bei sehr langen Nietreihen mit sehr vielen aufeinanderfolgenden Oberflächenabschnitten können die aufgenommenen Bildinformationen aufgrund der Menge nicht immer zweifelsfrei individuellen Oberflächenabschnitten zugeordnet werden.

Die US 2020 / 346 668 A1 beschreibt eine Robotervorrichtung. Die Robotervorrichtung umfasst einen Umfangsschlitten, der so konfiguriert ist, dass er die Robotervorrichtung entlang einer Schiene antreibt, die so konfiguriert ist, dass sie an einer gekrümmten Oberfläche angebracht wird. Der Umfangsschlitten umfasst eine Rahmenbasis, einen an der Rahmenbasis angebrachten Rahmen, eines oder mehrere Räder, die mit der Rahmenbasis gekoppelt und so konfiguriert sind, dass sie in die Schiene eingreifen, eine Schneckengetriebeanordnung und ein Hauptantriebszahnrad, das mit der Schneckengetriebeanordnung gekoppelt und so konfiguriert ist, dass es in eine an der Schiene angeordnete Zahnstange eingreift. Die Robotervorrichtung umfasst auch einen Transversalträger, umfassend einen Querschlitten, der verschiebbar an dem Rahmen angebracht ist, eine Querzahnstange, die mit dem Querschlitten gekoppelt ist, einen Querschlittenmotor, der an dem Umfangsschlitten angebracht ist, und ein Querschlitten-Antriebszahnrad, das mit dem Querschlittenmotor gekoppelt ist und eine Verzahnung aufweist, die mit entsprechenden Zähnen der Querzahnstange in Eingriff steht.

Die US 2016 / 377 424 A1 beschreibt eine Vorrichtung mit einem automatisch geführten Fahrzeug, das sich während des Betriebs der Vorrichtung auf einer Oberfläche einer Verbundstruktur bewegt, um die Verbundstruktur zu inspizieren, ein Oberflächeninspektionssensorsystem, das mit dem automatisch geführten Fahrzeug verbunden ist, und eine Steuerung für das automatisch geführte Fahrzeug und das Oberflächeninspektionssensorsystem, die mit dem automatisch geführten Fahrzeug und dem Oberflächeninspektionssensorsystem in Verbindung steht.

Die US 2010 / 122 444 A1 beschreibt ein Gerät mit einem Schienensystem, einem mehrachsigen Schlitten, einem Werkzeugmodul und einer Steuerung. Das Schienensystem kann an einer Oberfläche einer Struktur befestigt werden. Der mehrachsige Schlitten ist mit dem Schienensystem gekoppelt. Der mehrachsige Schlitten ist in der Lage, sich entlang des Schienensystems zu bewegen und ein Nietwerkzeug in Achsen relativ zur Oberfläche zu bewegen. Das Werkzeugmodul kann abnehmbar mit dem mehrachsigen Schlitten verbunden werden. Das Werkzeugmodul kann aus einem Rahmen bestehen und das Nietwerkzeug aufnehmen. Die Steuerung kann in der Lage sein, die Bewegung des Nietwerkzeugs zu einer Anzahl von Stellen auf der Oberfläche der Struktur zu steuern und kann in der Lage sein, das Nietwerkzeug zu veranlassen, eine Anzahl von Nieten in der Anzahl von vorgewählten Stellen in Reaktion auf ein Signal zu installieren.

Die FR 3 045 828 A1 beschreibt eine Vorrichtung zum Messen und Prüfen der Konformität eines Aufpralls auf eine Struktur. Die Vorrichtung umfasst einen Tragrahmen mit einer hohlen Unterseite, die dazu bestimmt ist, gegenüber dem Aufprall gegen eine Oberfläche der Struktur positioniert zu werden, wobei die hohle Unterseite eine Aufstellebene definiert, ein optisches Dimensionsmessmittel, das so konfiguriert ist, dass es in Richtung der hohlen Unterseite gerichtet ist, wobei das optische Dimensionsmessmittel auf dem Tragrahmen in einem solchen Abstand positioniert ist, dass die Verlegeebene mit einer Bezugsebene des optischen Dimensionsmessmittels zusammenfällt, ein Verwaltungsmodul, das eine Einheit zur Verarbeitung mindestens eines von dem optischen Dimensionsmessmittel erhaltenen Bildes und einen Anzeigebildschirm umfasst, der dazu bestimmt ist, eine Information bezüglich der Konformität des Aufpralls zu liefern.

### Beschreibung

Folglich ist die Aufgabe der Erfindung, ein System und ein Verfahren vorzuschlagen, mit dem möglichst rasch und zuverlässig eine Prüfung einer Oberfläche eines Luft- oder Raumfahrzeugs durchführbar ist.

Die Aufgabe wird gelöst durch ein System mit den Merkmalen des unabhängigen Anspruchs 1. Vorteilhafte Ausführungsformen und Weiterbildungen sind den Unteransprüchen und der nachfolgenden Beschreibung zu entnehmen.

Gemäß einem ersten Aspekt der Erfindung wird ein System zum Prüfen einer Oberfläche eines Luft- oder Raumfahrzeugs, vorgeschlagen, das System aufweisend mindestens einen Schlitten mit einer Führungseinrichtung, die in einer an der Oberfläche des Luft- oder Raumfahrzeugs halterbaren Schiene entlang einer Führungsachse beweglich lagerbar ist, eine erste Antriebseinrichtung, die mit dem Schlitten gekoppelt ist und dazu ausgebildet ist, in die Schiene einzugreifen und den Schlitten bedarfsweise entlang der Schiene zu bewegen, wobei die erste Antriebseinrichtung zum Zurücklegen eines vorbestimmten Bewegungsinkrements über ein kurzes Zeitintervall angesteuert wird, wobei die erste Antriebseinrichtung mit Positionsfeedback angesteuert wird, einen an dem Schlitten angeordneten Halterahmen, der quer zu der Führungsachse verläuft und von der Führungseinrichtung beabstandet ist, mindestens eine Oberflächenabtastvorrichtung, die an dem Halterahmen angeordnet ist und dazu ausgebildet ist, eine Charakteristik der Oberfläche zu erfassen und durch Vergleich mit einer vorgesehenen Charakteristik Formabweichungsstellen zu identifizieren, und eine Verarbeitungseinheit, die mit ersten Antriebseinrichtung und der Oberflächenabtastvorrichtung gekoppelt ist und ausgebildet ist, zum Ansteuern der ersten Antriebseinrichtung zum Bewegen des Schlittens entlang eines Bereichs der Oberfläche, Ansteuern der Oberflächenabtastvorrichtung zum Abtasten der Oberfläche entlang des Bereichs der Oberfläche, und identifizierte Formabweichungsstellen von der Oberflächenabtastvorrichtung zu erfassen und mit einer zugehörigen Position der Führungseinrichtung an der Schiene korreliert auszugeben und/oder auf einem Datenträger zu speichern.

Eine derartige Schiene könnte beispielsweise ohnehin für eine automatisierte Bohr- und/oder Nietvorrichtung vorgesehen sein und demzufolge durch das System mitgenutzt werden. Es ist beispielsweise bekannt, derartige Schienen bewegbar an einem Traggerüst über einem Rumpfbauplatz anzuordnen. Werden Rumpfbauteile an den Bauplatz herangeführt, kann die Schiene abgesenkt und an den Rumpfbauteilen ausgerichtet werden. Durch Saugvorrichtungen oder ähnliches kann die Schiene an den Rumpfbauteilen fixiert werden. Üblicherweise wird die Schiene parallel zu einer Längsachse des Luft- oder Raumfahrzeugs ausgerichtet. Es ist jedoch auch bekannt, derartige Schienen quer dazu, d.h. im Wesentlichen in Umfangsrichtung, auszurichten und zu fixieren. Die Nutzung des erfindungsgemäßen Systems kann bevorzugt in beiden möglichen Schienenrichtungen erfolgen.

Die erste Antriebseinrichtung dient der Bewegung des Schlittens auf der Schiene. Hierzu kann die erste Antriebsvorrichtung an dem Schlitten befestigt sein und ein Eingriffselement aufweisen, das in die Schiene eingreifen kann. Die erste Antriebseinrichtung könnte etwa einen Schrittmotor, einen positionsgeregelten Motor oder ähnliches umfassen, der eine präzise Bewegungssteuerung ermöglicht. Ziel ist, den Schlitten nacheinander an aufeinanderfolgenden Oberflächenabschnitten, d.h. an aufeinanderfolgenden Positionen entlang der Schiene zu positionieren, sodass die Oberflächenabtastvorrichtung nacheinander die Oberflächenabschnitte untersuchen kann.

Die Oberflächenabtastvorrichtung kann auf unterschiedliche Arten realisiert sein. Bevorzugt ist sie, wie eingangs erläutert, als optische Abtastvorrichtung ausgebildet und kann berührungslos mittels der Erfassung und Auswertung eines Bildes eines projizierten Musters sichtbaren Lichts bestimmte Charakteristika prüfen. Eine solche Vorrichtung ist beispielsweise von 8tree bekannt. Es sind indes auch mechanische Abtastvorrichtungen oder Abtastvorrichtungen auf Basis nicht sichtbaren Lichts denkbar.

Der Schlitten ist mechanisch zum Tragen der Oberflächenabtastvorrichtung ausgeführt. Da die zu untersuchende Oberfläche parallel neben der Schiene verläuft, wird die Oberflächenabtastvorrichtung von der Schiene und von der Oberfläche beabstandet über die Oberfläche geführt. Hierfür ist der Halterahmen vorgesehen, der quer zu der Führungsachse verläuft. Die Größe des Halterahmens kann an die spezifische Anwendung und insbesondere die Ausdehnung der zu untersuchenden Oberflächenmerkmale angepasst werden.

Die Verarbeitungseinheit könnte beispielsweise eine Prozessoreinheit, eine Speichereinheit und entsprechende Kommunikations- und Steuerschnittstellen umfassen. Die Verarbeitungseinheit ist in der Lage, die erste Antriebseinrichtung anzusteuern und die Oberflächenabtastvorrichtung zu veranlassen eine Abtastsequenz durchzuführen. Eine Kopplung der Verarbeitungseinheit mit der ersten Antriebseinrichtung und/oder der Oberflächenabtastvorrichtung könnte drahtgebunden oder drahtlos realisiert sein. Die Verarbeitungseinheit ist dazu ausgebildet, die Informationen von der Oberflächenabtastvorrichtung aufzunehmen und mit Positionsinformationen zu korrelieren.

Die Positionsinformationen können unterschiedlich generiert werden. Die Verarbeitungseinheit könnte etwa ohnehin Kenntnis darüber besitzen, wo sich der Schlitten gerade befindet, da ausschließlich die Verarbeitungseinheit durch Ansteuern der ersten Antriebseinrichtung die Position des Schlittens aktiv beeinflusst, wenn der Schlitten an der Schiene verbleibt. Lässt die Verarbeitungseinheit den Schlitten mehrmals inkrementell bewegen, kann durch Addition der Einzelbewegungen die momentane Position des Schlittens ermittelt werden. Andererseits könnte die Position durch eine Lokalisierung des Schlittens mithilfe einer Positionserfassungseinrichtung durchgeführt werden. Dies ist weiter nachfolgend ausgeführt.

Insgesamt ist das erfindungsgemäße System folglich in der Lage, automatisiert über einen sehr großen Flächenbereich Oberflächenmerkmale zu prüfen und Prüfergebnisse mit Positionen zu korrelieren. Damit sind sehr einfach und nachvollziehbar sämtliche nachzuarbeitenden Stellen an der zu untersuchenden Oberfläche abrufbar. Dies stellt eine erhebliche Vereinfachung bekannter Verfahren und Systeme dar. Das erfindungsgemäße System erlaubt das systematische, objektive, transparente und frühzeitige Erkennen etwaiger Qualitätsmängel. Es kann eine zuverlässige Harmonisierung einer Datenbasis und eine Verfolgung der Lokalisierung von nachzuarbeitenden Oberflächenabschnitten erreicht werden. Digitale Daten zu jedem hergestellten Luft- oder Raumfahrzeug könnte über die gesamte Fertigungskette hinweg aufbewahrt werden. Das System unterstützt eine automatisierte Qualitätsprüfung zur automatischen Erkennung und Dokumentation von Abweichungen in der Oberflächenqualität, wie etwa abgezogene oder abstehende Verbindungselemente, Dellen, Kratzer und ähnliches. Es kann während der Herstellung, bei der Wartung und während des Betriebs eingesetzt werden. Letzteres kann insbesondere bei Raumfahrzeugen vorteilhaft sein, da eine Untersuchung einer äußeren Oberfläche nicht durch ein Besatzungsmitglied erfolgen muss, sondern automatisiert durchführbar ist.

**In** einer vorteilhaften Ausführungsform weist das System ferner eine mit der Verarbeitungseinheit gekoppelte zweite Antriebseinrichtung auf, die an dem Halterahmen angeordnet ist und dazu ausgebildet ist, die Oberflächenabtastvorrichtung bedarfsweise entlang des Halterahmens zu bewegen. Die Oberflächenabtastvorrichtung kann dann auch quer zu der Führungsachse bewegt werden, um größere Oberflächenabschnitte abzutasten, die mehrere Nietreihen oder andere, zu untersuchende Oberflächenmerkmale aufweisen. Die zweite Antriebseinrichtung ist an dem Halterahmen oder der Oberflächenabtasteinrichtung angeordnet und bevorzugt ebenso mit der Verarbeitungseinheit gekoppelt. Die Verarbeitungseinheit ist folglich bevorzugt dazu ausgebildet, die zweite Antriebseinrichtung zum Bewegen der Oberflächenabtastvorrichtung entlang des Halterahmens anzusteuern. Die Oberflächenabtastvorrichtung ist weiterhin bevorzugt an dem Halterahmen geführt, beispielsweise über eine Schienen- oder Achsenkonstruktion, sodass ein präziser Abstand zu der zu untersuchenden Oberfläche sowie eine präzise Bewegung der Oberflächenabtastvorrichtung erreicht wird.

In einer vorteilhaften Ausführungsform sind zwei oder mehr Oberflächenabtastvorrichtungen an dem Halterahmen angeordnet und mit der Verarbeitungseinheit gekoppelt, wobei die Verarbeitungseinheit dazu ausgebildet ist, die Oberflächenabtastvorrichtungen abwechselnd zum Abtasten aufeinander folgender Oberflächenabschnitte anzusteuern. Insbesondere optische Oberflächenabtastvorrichtungen benötigen für eine Abtastsequenz eine gewisse Verarbeitungszeit. Während einer Lichtprojektion erfolgt eine optische Aufnahme des betreffenden Oberflächenabschnitts, woran sich eine Verarbeitung der gesammelten Informationen anschließt, um etwaige Formabweichungsstellen zu identifizieren. In der Zeit, in der die Identifizierung erfolgt, kann keine weitere Abtastung durch die Oberflächenabtastvorrichtung erfolgen. Zwischen zwei aufeinanderfolgenden Abtastsequenzen ist folglich eine gewisse Wartezeit erforderlich. Die Integration zweier oder mehr Oberflächenabtastvorrichtungen an einem einzelnen Halterahmen kann daher die Geschwindigkeit der Abtastvorgänge zumindest verdoppeln. Nacheinander, von dem Schlitten angefahrene Positionen werden abwechselnd von einer ersten oder einer zweiten oder einer weiteren Oberflächenabtastvorrichtung abgetastet. Die Oberflächenabtastvorrichtungen können mit verschiedenen Winkeln oder gleich ausgerichtet und an verschiedenen Positionen des Halterahmens angeordnet sein.

Des Weiteren ist vorstellbar, dass das erfindungsgemäße System mehrere Schlitten aufweist, die auf die oben genannte Weise ausgestattet sind. Folglich kann insbesondere bei längeren Nietreihen, beispielsweise bei einem größeren Verkehrsflugzeug, eine deutlich schnellere Abtastung vorgenommen werden. Es ist grundsätzlich vorstellbar, eine abzutastende Oberfläche in mehrere Segmente aufzuteilen und diese Segmente jeweils von einem Schlitten abfahren zu lassen. Jeder Schlitten könnte dabei eine oder zwei Oberflächenabtastvorrichtungen umfassen. Das System ist flexibel und erlaubt, mehrere Schlitten jeweils als eines von mehreren Modulen einzusetzen. Dabei ist möglich, eine einzelne Verarbeitungseinheit vorzusehen, die mit allen Schlitten, d.h. allen Modulen, gekoppelt ist. Grundsätzlich wäre möglich, auch mehrere Verarbeitungseinheiten einzusetzen, die mit einem oder wenigen Schlitten gekoppelt sind, wobei die mehreren Verarbeitungseinheiten die gesammelten Daten auf einem gemeinsamen Datenträger speichern bzw. auf einer gemeinsamen Anzeige ausgeben.

In einer vorteilhaften Ausführungsform weist die Führungseinrichtung mehrere, voneinander beabstandete Rollen auf, die in einer gemeinsamen Ebene liegen und jeweils um eine Achse rotierbar sind, die senkrecht zu der gemeinsamen Ebene angeordnet sind, wobei die Rollen derart zueinander angeordnet sind, dass sie dazu befähigt sind, zwei einander gegenüberliegende Längskanten der Schiene zu umgreifen und entlang der Längskanten zu rollen. Eine geeignete Schiene wird beispielsweise durch eine LFT-Schiene von MTM Robotics bereitgestellt. Diese stellt eine im Wesentlichen ebene, plattenförmige und in einem Abstand von der Oberfläche positionierbare Basis bereit, an der Führungseinrichtungen führbar sind. Die Führungseinrichtung weist zum Führen entlang dieser Schiene Rollen auf, die mit beiden Längskanten der Schiene in Eingriff geraten. Die Rollen weisen hierfür an ihrer Umfangsfläche eine Rille auf, die an die Stärke der Schiene angepasst ist. Die Drehachsen dieser Rollen verlaufen dabei senkrecht zu der Führungsachse und der flächigen Erstreckung der Schiene. Grundsätzlich wäre ausreichend, mindestens drei Rollen zu verwenden, wobei ein Teil der Rollen an einer ersten Längskante angeordnet ist, ein anderer Teil der Rollen an der zweiten Längskante. Es ist besonders günstig, zwei Rollenpaare einzusetzen, die entlang der Führungsachse voneinander beabstandet sind. Durch die Verwendung von Rollen kann eine reibungsarme Führung realisiert werden, die zudem eine ausreichende mechanische Stabilität bietet.

In einer vorteilhaften Ausführungsform weist die erste Antriebseinrichtung mindestens ein Zahnrad zum Eingreifen in eine Verzahnung der Schiene auf. Die Schiene könnte mit einer von ihrer nach außen gewandten Oberfläche erreichbaren Verzahnung ausgebildet sein, die sich zwischen den Längskanten befindet. Das Zahnrad ist mit dieser Verzahnung korrespondierend gestaltet und bevorzugt über ein Getriebe mit einem Motor der ersten Antriebseinrichtung gekoppelt. Es ist dabei besonders günstig, dass das Getriebe selbsthemmend ist oder eine solche Übersetzung aufweist, dass mit einem geeigneten Motor, beispielsweise einem Schrittmotor, stets eine ausreichend große Haltekraft an einer momentan eingestellten, angefahrenen Position bei ruhendem Motor erreicht wird.

In einer vorteilhaften Ausführungsform weist der Halterahmen mindestens eine Stützstrebe auf, die von dem Halterahmen absteht und eine Rolle zum Abstützen auf der Oberfläche des Luft- oder Raumfahrzeugs aufweist. Da die Oberflächenabtastvorrichtung in einem Abstand von der Schiene an dem Halterahmen angeordnet und zudem von der zu untersuchenden Oberfläche beabstandet ist, wird durch das Eigengewicht der Oberflächenabtastvorrichtung und des Halterahmens sowie etwaiger zusätzlicher Komponenten ein Drehmoment auf die Führungseinrichtung ausgeübt. Durch die Stützstrebe, die sich an einem von der Führungseinrichtung abgewandten Ende des Halterahmens befindet, kann der Halterahmen zum Ausgleich dieses Drehmoments auf der Oberfläche abgestützt werden. Die Rolle könnte insbesondere eine Gummirolle sein, die die zu untersuchende Oberfläche schont. Ihre Drehachse ist dabei quer zu der Führungsachse gewählt und beispielsweise tangential zu der zu untersuchenden Oberfläche bzw. parallel zu einer Längserstreckung des Halterahmens ausgerichtet.

In einer vorteilhaften Ausführungsform weist das System ferner eine Positionserfassungseinrichtung auf die dazu ausgebildet ist, eine momentane Position des Schlittens relativ zu der Oberfläche zu erfassen, wobei die Positionserfassungseinrichtung mit der Verarbeitungseinheit gekoppelt ist. Neben der vorangehend genannten Möglichkeit, eine Position durch Addieren von Bewegungsinkrementen zu schätzen, kann eine Positionserfassungseinrichtung eine präzise Position bereitstellen. Etwaige Ungenauigkeiten, die durch den Antrieb des Schlittens oder der Wahl eines Antriebsintervalls der ersten Antriebseinrichtung erfolgen, können damit verhindert werden. Zudem ist möglich, eine Bewegung einer Vielzahl von Schlitten besser aufeinander abzustimmen.

In einer vorteilhaften Ausführungsform ist die Positionserfassungseinrichtung aus einer Gruppe von Positionserfassungseinrichtungen ausgewählt, die Gruppe umfassend laserbasierte Distanz- oder Positionssensoren, elektromechanische Positionssensoren, magnetbasierte Positionssensoren, Innenraum-GPS, und LiDAR. Grundsätzlich sind auch alle anderen bekannten Positionserfassungseinrichtungen einsetzbar, die auf unterschiedlichen Funktionsprinzipien basieren. Grundsätzlich kann die Positionserfassungseinrichtung eine Referenzeinheit umfassen, die relativ zu der Schiene fest im Raum positioniert ist. Eine mobile Einheit ist an dem jeweiligen Schlitten angebracht und kann, abhängig von der Funktionsweise, mit der Referenzeinheit interagieren, um die Position zu erfassen. Dies kann durch Triangulationsverfahren, Laufzeitverfahren, Inkrementgeber, Mustererkennungsverfahren oder anderes erfolgen. Elektromechanische Positionssensoren könnten etwa mit dem vorangehend genannten Zahnrad oder einem anderen rotierenden oder sich bewegenden Element gekoppelt sein und eine Stellung des Zahnrades bzw. des Elements erfassen. Das Zahnrad bzw. das betreffende Element kann bei der Bewegung einen Schalter oder dergleichen betätigen und hierdurch eine in der Verarbeitungseinheit erfasste Position inkrementell ändern.

In einer vorteilhaften Ausführungsform ist die Führungseinrichtung dazu ausgebildet, bedarfsweise manuell an einer beliebigen Position von der Schiene gelöst oder eingesetzt zu werden. Insbesondere in Kombination mit der Positionserfassungseinrichtung können die einzelnen Schlitten an einer beliebigen Stelle der Schiene eingesetzt werden, um dort zu einem bestimmten Oberflächenabschnitt zu fahren und eine Oberflächenabtastung vorzunehmen. Befindet sich etwa entlang der abzutastenden Oberfläche ein Hindernis, das durch ein Verfahren des Schlittens nicht überwunden werden kann, könnte ein betreffender Schlitten manuell von der Schiene entfernt und an einer anderen Position wieder eingesetzt werden. Anschließend kann die Position erfasst werden, um einen nächstmöglichen Oberflächenabschnitt zu erreichen und abzutasten.

In diesem Zusammenhang ist darauf hinzuweisen, dass die erste Antriebseinrichtung auf unterschiedliche Arten angesteuert bzw. betrieben werden könnte, wobei die erste Antriebseinrichung gemäß der Erfindung allerdings, zum Zurücklegen eines vorbestimmten Bewegungsinkrements, über ein kurzes Zeitintervall angesteuert wird. Unter Berücksichtigung einer Anlaufträgheit, einer inhärenten Betriebsungenauigkeit der ersten Antriebseinheit und anderer Faktoren wird durch das vorbestimmte Zeitintervall eine bestimmte Strecke entlang der Schiene zurückgelegt. Diese kann von einem gewünschten Bewegungsinkrement leicht abweichen. Dies ist insbesondere bei kürzeren Strecken entlang der Oberfläche möglicherweise tolerabel. Gemäß der Erfindung wird die erste Antriebseinheit allerdings mit Positionsfeedback angesteuert, sodass ein sehr präzises Bewegungsinkrement mit geringer oder keiner Überlappung der nacheinander angefahrenen Oberflächenabschnitte realisiert wird.

Das System könnte ferner eine Markierungseinheit aufweisen, die dazu ausgebildet ist, Positionen von Formabweichungsstellen bereits direkt nach der Identifizierung auf der Oberfläche zu markieren. Hierfür könnte die Markierungseinheit zusammen mit der Oberflächenabtastvorrichtung an dem Halterahmen angeordnet und dazu ausgebildet sein, Tinte oder einen Aufkleber auf die betreffende Stelle aufzubringen. Vorstellbar ist auch, dass z.B. mit Tinte ein QR-Code, der Informationen zu den Merkmalen der Anomalie umfassen könnte, neben der entdeckten Anomalie aufgetragen wird. Dies erhöht die Kompabilität zu anderen Systemen, da beispielsweise die Merkmale der Anomalie unkompliziert mit einem Smartphone aufrufbar sind, etwa als Datensatz oder Augmented Reality (AR).

Der Schlitten kann zudem für die Anordnung weiterer Endeffektoren verwendet werden, die das Reinigen oder Lackieren/Beschichten der Oberfläche betreffen.

Analog zu den vorangehenden Ausführungen des Systems betrifft die Erfindung gemäß einem zweiten Aspekt ein Verfahren zum Prüfen einer Oberfläche eines Luft- oder Raumfahrzeugs, aufweisend die Schritte: Bereitstellen eines Schlitten mit einer Führungseinrichtung, die in einer an der Oberfläche des Luft- oder Raumfahrzeugs halterbaren Schiene entlang einer Führungsachse beweglich lagerbar ist, Bewegen des Schlittens mittels einer ersten Antriebseinrichtung, die mit dem Schlitten gekoppelt ist und dazu ausgebildet ist, in die Schiene einzugreifen, zum Einnehmen mehrerer aufeinanderfolgender Positionen entlang der Schiene, wobei die erste Antriebseinrichtung zum Zurücklegen eines vorbestimmten Bewegungsinkrements über ein kurzes Zeitintervall angesteuert wird, wobei die erste Antriebseinrichtung mit Positionsfeedback angesteuert wird, Abtasten jeweils eines an einer momentanen Position befindlichen Oberflächenabschnitts mittels einer Oberflächenabtastvorrichtung, die an einem an dem Schlitten angebrachten Halterahmen angeordnet ist und dazu ausgebildet ist, eine Charakteristik der Oberfläche zu erfassen und durch Vergleich mit einer vorgesehenen Charakteristik Formabweichungsstellen zu identifizieren, und Erfassen etwaiger von der Oberflächenabtastvorrichtung identifizierter Formabweichungsstellen durch eine Verarbeitungseinheit, Korrelieren mit der momentanen Position der Führungseinrichtung an der Schiene und Ausgeben und/oder Speichern auf einem Datenträger.

In einer vorteilhaften Ausführungsform weist das Verfahren ferner das Bewegen der Oberflächenabtastvorrichtung entlang einer zu der Führungsachse quer verlaufenden Querachse mittels einer mit der Verarbeitungseinheit gekoppelten zweiten Antriebseinrichtung auf, die an dem Halterahmen angeordnet ist.

In einer vorteilhaften Ausführungsform werden mehrere aufeinanderfolgende Abtastvorgänge abwechselnd von zwei oder mehr Oberflächenabtastvorrichtungen durchgeführt, die an dem Halterahmen angeordnet und mit der Verarbeitungseinheit gekoppelt sind.

In einer vorteilhaften Ausführungsform weist das Verfahren ferner das Erfassen einer momentanen Position des Schlittens mittels einer mit der Verarbeitungseinheit gekoppelten Positionserfassungseinrichtung auf.

In einer vorteilhaften Ausführungsform werden beim Abtasten Bohrungen und/oder Nietverbindungen abgetastet und auf Fehler untersucht. Durch die Untersuchung von Bohrungen, die zum Aufnehmen eines Niets hergestellt wurden, könnten bereits vorbeugend Fehler erkannt und behoben werden. Beim Abtasten und Untersuchen von Nietverbindungen können Fehlstellungen ermittelt und der Nacharbeit zugänglich gemacht werden.

Wie weiter vorangehend erwähnt könnte weiterhin das Aufbringen von Tinte oder eines Aufklebers mittels einer Markierungseinheit erfolgen, um direkt nach der Identifizierung einer Formabweichung diese auf der Oberfläche zu markieren.

### Kurze Beschreibung der Figuren

Nachfolgend wird anhand der beigefügten Zeichnungen näher auf Ausführungsbeispiele eingegangen. Die Darstellungen sind schematisch und nicht maßstabsgetreu. Gleiche Bezugszeichen beziehen sich auf gleiche oder ähnliche Elemente. Es zeigen:
- Fig. 1 bis 3: eine schematische Darstellung eines Systems gemäß einem Ausführungsbeispiel in unterschiedlichen Darstellungen.
- Fig. 4: ein Flugzeug mit einer darauf angeordneten Schiene.

### Detaillierte Beschreibung von Ausführungsbeispielen

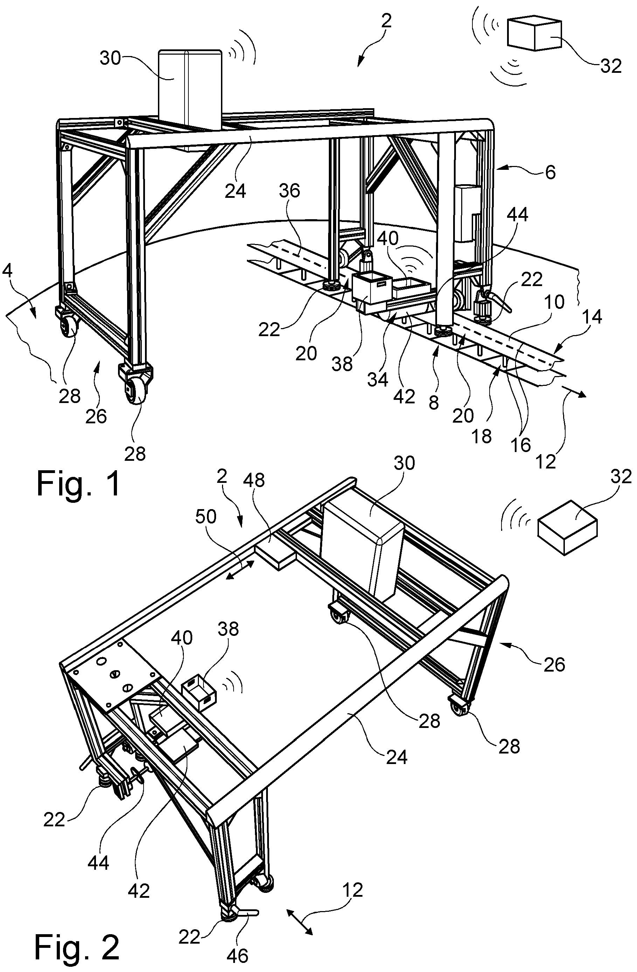

Fig. 1 zeigt eine schematische Darstellung eines Systems 2 zum Prüfen einer Oberfläche 4 eines Luft- oder Raumfahrzeugs. Das System 2 weist einen Schlitten 6 mit einer Führungseinrichtung 8 auf, die in einer an der Oberfläche 4 halterbaren Schiene 10 entlang einer Führungsachse 12 beweglich gelagert ist. Die Schiene 10 ist beispielhaft eine LFT-Schiene von MTM Robotics. Sie umfasst eine Basis 14, welche zwei einander entgegengesetzt angeordnete Längskanten 16 aufweist und durch Saugnäpfe 18 oder andere Halter in einem Abstand von der Oberfläche 4 gehaltert ist. Die Führungseinrichtung 8 weist zwei Rollenpaare 20 auf, die in einer durch die Basis 14 bestimmten Ebene liegen und voneinander beabstandet sind. Jedes Rollenpaar 20 weist zwei Rollen 22 auf, wobei beide Rollen 22 jedes Rollenpaars 20 mit jeweils einer der beiden Längskanten 16 mittels einer Umfangsrille in Kontakt steht. Der Schlitten 6 wird durch die Führungseinrichtung 8 präzise entlang der Führungsachse 12 leichtgängig verschiebbar gelagert.

An dem Schlitten 6 ist ein Halterahmen 24 angeordnet, der sich quer zu der Führungsachse 12 und in einem Abstand zu der Oberfläche 4 erstreckt. An einem der Führungseinrichtung 8 entgegengesetzten Ende des Halterahmens 24 ist eine Stützstrebe 26 angeordnet, die exemplarisch zwei Stützrollen 28 umfasst. Die Stützrollen 28 sind um eine Achse rotierbar, die quer zu der Führungsachse 12 liegt. Der Halterahmen 24 wird folglich durch die Stützstrebe 26 auf der Oberfläche 4 abgestützt und ist damit in der Lage, eine bestimmte Last zu tragen.

Eine Oberflächenabtastvorrichtung 30 befindet sich auf dem Halterahmen 24 und ist dazu ausgebildet, eine Charakteristik der Oberfläche 4 zu erfassen und durch Vergleich mit einer vorgesehenen Charakteristik Formabweichungsstellen zu identifizieren. Erfasste Daten werden beispielhaft drahtlos an eine Verarbeitungseinheit 32 gesendet. Es könnten allerdings auch drahtgebundene Verbindungen eingesetzt werden. Die Verarbeitungseinheit 32 ist ferner mit einer ersten Antriebseinrichtung 34 gekoppelt, die mit einer Verzahnung 36 der Schiene 10 gekoppelt ist und dazu ausgebildet ist, den Schlitten 6 entlang der Führungsachse 12 zu bewegen. Die erste Antriebseinrichtung 34 weist beispielhaft einen elektrischen Energiespeicher 38, eine Steuereinheit 40, und einen durch die Steuereinheit 40 angesteuerten und von dem Energiespeicher mit elektrischer Leistung versorgten Motor 42 auf, der ein Zahnrad 44 mit an die Verzahnung 36 angepasster Gestalt antreibt.

Die Steuereinheit 40 kann ferner eine Positionserfassungseinrichtung aufweisen oder damit gekoppelt sein. Damit kann eine momentane Position des Schlitten 6 an der Schiene 10 erfasst werden.

Die Verarbeitungseinheit 32 ist ausgebildet, die erste Antriebseinrichtung 34 anzusteuern, um den Schlitten 6 entlang der Oberfläche 4 an der Schiene 10 entlangzubewegen. Sie ist ferner in der Lage, die Oberflächenabtastvorrichtung 30 zum Abtasten der Oberfläche 4 entlang des Bereichs der Oberfläche 4 anzusteuern und etwaige identifizierte Formabweichungsstellen von Oberflächenabtastvorrichtung 30 zu erfassen und mit einer zugehörigen Position der Führungseinrichtung 8 an der Schiene 10 korreliert auszugeben und/oder auf einem Datenträger zu speichern. Der Schlitten 6 wird durch die Verarbeitungseinheit 32 folglich nacheinander an aufeinanderfolgenden Positionen entlang der Schiene 10 positioniert, um dort jeweils eine Erfassung eines Oberflächenabschnitts durchzuführen, und um anschließend zu einer nächsten Position verfahren zu werden, an der mit dem folgenden Oberflächenabschnitt fortgefahren wird.

In Fig. 2 wird eine schräge Draufsicht auf das System 2 gezeigt. Hier ist das Zahnrad 44 etwas deutlicher zu sehen, das mit der Verzahnung 36 der Schiene 10 in Eingriff steht. Ferner ist die Führungseinrichtung 8 derart ausgeführt, dass über Knebel 46 die Rollen 22, die von den Stützrollen 28 abgewandt sind, außer Eingriff mit den entsprechenden Längskanten 16 der Schiene 16 bringbar sind. Dadurch ist es möglich, den Schlitten 6 von der Schiene 10 zu entnehmen oder wieder einzusetzen.

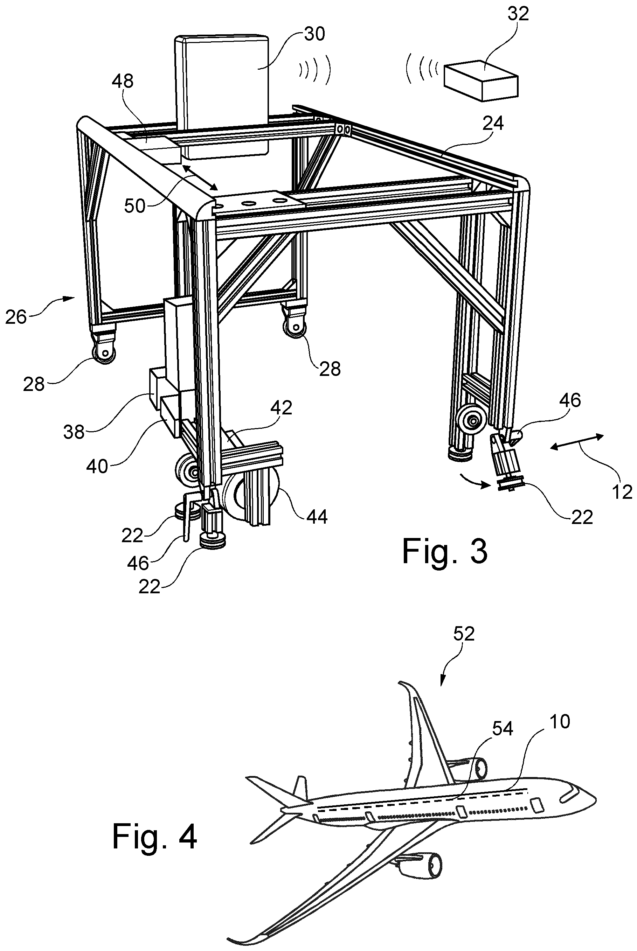

Fig. 3 zeigt eine der Rollen 22 in einer Position, die außer Eingriff der entsprechenden Längskante 16 ist. An dem Schlitten 6, der beispielhaft aus Rahmenprofilen hergestellt ist, ist ein an den Rollen 22 befindlicher Abschnitt schwenkbar und arretierbar gelagert. Durch den Knebel 46 kann eine Arretierung gelöst werden, um den Abschnitt nach außen von der betreffenden Längskante 16 weg zu verschwenken.

Damit können bedarfsweise auch mehrere der Schlitten 6 mit der Schiene 10 gekoppelt werden. Bei etwaigen Hindernissen kann jeder der Schlitten 6 einfach von der Schiene 10 entfernt und wieder eingesetzt werden.

Fig. 2 und 3 zeigen weiterhin eine zweite Antriebseinrichtung 48, die an dem Halterahmen 24 angeordnet und mit der Oberflächenabtastvorrichtung 30 gekoppelt ist. Hierdurch kann die Oberflächenabtastvorrichtung 30 entlang einer Querachse 50 verschoben werden, die quer zu der Führungsachse 12 liegt. Die zweite Antriebseinrichtung 48 ist hierfür mit der Verarbeitungseinheit 32 gekoppelt.

Schließlich zeigt Fig. 4 ein Flugzeug 52, auf dem beispielhaft eine Schiene 10 angeordnet ist, die zu einer Nietreihe 54, welche lediglich exemplarisch angeordnet ist, parallel verläuft. Hierauf kann der Schlitten 6 zum Prüfen der Nietreihe 54 verlaufen.

Ergänzend ist darauf hinzuweisen, dass "umfassend" oder "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können, da der Schutzumfang der gegenwärtigen Erfindung in erster Linie durch die nachfolgenden Patentansprüche begrenzt wird. Bezugszeichen in den Ansprüchen sind nicht als Einschränkung anzusehen.

### Bezugszeichenliste

- 2: System
- 4: Oberfläche
- 6: Schlitten
- 8: Führungseinrichtung
- 10: Schiene
- 12: Führungsachse
- 14: Basis
- 16: Längskante
- 18: Saugnapf
- 20: Rollenpaar
- 22: Rolle
- 24: Halterahmen
- 26: Stützstrebe
- 28: Stützrolle
- 30: Oberflächenabtastvorrichtung
- 32: Verarbeitungseinheit
- 34: erste Antriebseinrichtung
- 36: Verzahnung
- 38: Energiespeicher
- 40: Steuereinheit
- 42: Motor
- 44: Zahnrad
- 46: Knebel
- 48: zweite Antriebseinrichtung
- 50: Querachse

## Patentansprüche

1. System (2) zum Prüfen einer Oberfläche (4) eines Luft- oder Raumfahrzeugs, aufweisend:
mindestens einen Schlitten (6) mit einer Führungseinrichtung (8), die in einer an der Oberfläche (4) des Luft- oder Raumfahrzeugs halterbaren Schiene (10) entlang einer Führungsachse beweglich lagerbar ist,
eine erste Antriebseinrichtung (34), die mit dem Schlitten (6) gekoppelt ist und dazu ausgebildet ist, in die Schiene (10) einzugreifen und den Schlitten (6) bedarfsweise entlang der Schiene (10) zu bewegen, wobei die erste Antriebseinrichtung (34) zum Zurücklegen eines vorbestimmten Bewegungsinkrements über ein kurzes Zeitintervall angesteuert wird, wobei die erste Antriebseinrichtung (34) mit Positionsfeedback angesteuert wird, sodass ein sehr präzises Bewegungsinkrement mit geringer oder keiner Überlappung der nacheinander angefahrenen Oberflächenabschnitte realisiert wird,
einen an dem Schlitten (6) angeordneten Halterahmen (24), der quer zu der Führungsachse verläuft und von der Führungseinrichtung (8) beabstandet ist,
mindestens eine Oberflächenabtastvorrichtung (30), die an dem Halterahmen (24) angeordnet ist und dazu ausgebildet ist, eine Charakteristik der Oberfläche (4) zu erfassen und durch Vergleich mit einer vorgesehenen Charakteristik Formabweichungsstellen zu identifizieren, und
eine Verarbeitungseinheit (32), die mit ersten Antriebseinrichtung (34) und der Oberflächenabtastvorrichtung (30) gekoppelt ist und ausgebildet ist, zum:
- Ansteuern der ersten Antriebseinrichtung (34) zum Bewegen des Schlittens (6) entlang eines Bereichs der Oberfläche (4),
- Ansteuern der Oberflächenabtastvorrichtung (30) zum Abtasten der Oberfläche (4) entlang des Bereichs der Oberfläche (4), und
- identifizierte Formabweichungsstellen von der Oberflächenabtastvorrichtung (30) zu erfassen und mit einer zugehörigen Position der Führungseinrichtung (8) an der Schiene (10) korreliert auszugeben und/oder auf einem Datenträger zu speichern.

2. System (2) nach Anspruch 1,
ferner aufweisend eine mit der Verarbeitungseinheit (32) gekoppelte zweite Antriebseinrichtung (48), die an dem Halterahmen (24) angeordnet ist und dazu ausgebildet ist, die Oberflächenabtastvorrichtung (30) bedarfsweise entlang des Halterahmens (24) zu bewegen.

3. System (2) nach Anspruch 1 oder 2,
wobei zwei oder mehr Oberflächenabtastvorrichtungen (30) an dem Halterahmen (24) angeordnet und mit der Verarbeitungseinheit (32) gekoppelt sind, und
wobei die Verarbeitungseinheit (32) dazu ausgebildet ist, die Oberflächenabtastvorrichtungen (30) abwechselnd zum Abtasten aufeinanderfolgender Oberflächenabschnitte anzusteuern.

4. System (2) nach einem der vorhergehenden Ansprüche,
wobei die Führungseinrichtung (8) mehrere, voneinander beabstandete Rollen (22) aufweist, die in einer gemeinsamen Ebene liegen und jeweils um eine Achse rotierbar sind, die senkrecht zu der gemeinsamen Ebene angeordnet sind, und
wobei die Rollen (22) derart zueinander angeordnet sind, dass sie dazu befähigt sind, zwei einander gegenüberliegende Längskanten (16) der Schiene (10) zu umgreifen und entlang der Längskanten (16) zu rollen.

5. System (2) nach einem der vorhergehenden Ansprüche,
wobei die erste Antriebseinrichtung (34) mindestens ein Zahnrad (44) zum Eingreifen in eine Verzahnung der Schiene (10) aufweist.

6. System (2) nach einem der vorhergehenden Ansprüche,
wobei der Halterahmen (24) mindestens eine Stützstrebe (26) aufweist, die von dem Halterahmen (24) absteht und eine Rolle zum Abstützen auf der Oberfläche (4) des Luft- oder Raumfahrzeugs aufweist.

7. System (2) nach einem der vorhergehenden Ansprüche,
ferner aufweisend eine Positionserfassungseinrichtung, die dazu ausgebildet ist, eine momentane Position des Schlittens (6) relativ zu der Oberfläche (4) zu erfassen,
wobei die Positionserfassungseinrichtung mit der Verarbeitungseinheit (32) gekoppelt ist.

8. System (2) nach Anspruch 7, wobei die Positionserfassungseinrichtung aus einer Gruppe von Positionserfassungseinrichtungen ausgewählt ist, die Gruppe umfassend:
- laserbasierte Distanz- oder Positionssensoren,
- elektromechanische Positionssensoren,
- magnetbasierte Positionssensoren,
- Innenraum-GPS, und
- LiDAR.

9. System (2) nach einem der vorhergehenden Ansprüche,
wobei die Führungseinrichtung (8) dazu ausgebildet ist, bedarfsweise manuell an einer beliebigen Position von der Schiene (10) gelöst oder eingesetzt zu werden.

10. Verfahren zum Prüfen einer Oberfläche (4) eines Luft- oder Raumfahrzeugs, aufweisend die Schritte:
Bereitstellen eines Schlitten (6) mit einer Führungseinrichtung (8), die in einer an der Oberfläche (4) des Luft- oder Raumfahrzeugs halterbaren Schiene (10) entlang einer Führungsachse beweglich lagerbar ist,
Bewegen des Schlittens (6) mittels einer ersten Antriebseinrichtung (34), die mit dem Schlitten (6) gekoppelt ist und dazu ausgebildet ist, in die Schiene (10) einzugreifen, zum Einnehmen mehrerer aufeinanderfolgender Positionen entlang der Schiene (10), wobei die erste Antriebseinrichtung (34) zum Zurücklegen eines vorbestimmten Bewegungsinkrements über ein kurzes Zeitintervall angesteuert wird, wobei die erste Antriebseinrichtung (34) mit Positionsfeedback angesteuert wird, sodass ein sehr präzises Bewegungsinkrement mit geringer oder keiner Überlappung der nacheinander angefahrenen Oberflächenabschnitte realisiert wird,
Abtasten jeweils eines an einer momentanen Position befindlichen Oberflächenabschnitts mittels einer Oberflächenabtastvorrichtung (30), die an einem an dem Schlitten (6) angebrachten Halterahmen (24) angeordnet ist und dazu ausgebildet ist, eine Charakteristik der Oberfläche (4) zu erfassen und durch Vergleich mit einer vorgesehenen Charakteristik Formabweichungsstellen zu identifizieren, und
Erfassen etwaiger von der Oberflächenabtastvorrichtung identifizierter Formabweichungsstellen durch eine Verarbeitungseinheit (32), Korrelieren mit der momentanen Position der Führungseinrichtung (8) an der Schiene (10) und Ausgeben und/oder Speichern auf einem Datenträger.

11. Verfahren nach Anspruch 10,
ferner aufweisend Bewegen der Oberflächenabtastvorrichtung (30) entlang einer zu der Führungsachse quer verlaufenden Querachse (50) mittels einer mit der Verarbeitungseinheit (32) gekoppelten zweiten Antriebseinrichtung (48), die an dem Halterahmen (24) angeordnet ist.

12. Verfahren nach Anspruch 10 oder 11,
wobei mehrere aufeinanderfolgende Abtastvorgänge abwechselnd von zwei oder mehr Oberflächenabtastvorrichtungen (30) durchgeführt werden, die an dem Halterahmen (24) angeordnet und mit der Verarbeitungseinheit (32) gekoppelt sind.

13. Verfahren nach einem der Ansprüche 10 bis 12,
ferner aufweisend Erfassen einer momentanen Position des Schlittens (6) mittels einer mit der Verarbeitungseinheit (32) gekoppelten Positionserfassungseinrichtung.

14. Verfahren nach einem der Ansprüche 10 bis 13,
wobei beim Abtasten Bohrungen und/oder Nietverbindungen abgetastet und auf Fehler untersucht werden.

## Claims

1. System (2) for testing a surface (4) of an aircraft or spacecraft, comprising: at least one carriage (6) with a guide device (8) which can be mounted movably along a guide axis in a rail (10) which can be held on the surface (4) of the aircraft or spacecraft, a first drive device (34) which is coupled to the carriage (6) and is designed for this purpose, engaging in the rail (10) and moving the carriage (6) along the rail (10) as required, wherein the first drive device (34) is actuated to cover a predetermined movement increment over a short time interval, wherein the first drive device (34) is actuated with position feedback, so that a very precise movement increment is realized with little or no overlapping of the successively approached surface sections, a holding frame (24) arranged on the carriage (6), which extends transversely to the guide axis and is spaced apart from the guide device (8), at least one surface scanning device (30), which is arranged on the holding frame (24) and is designed to detect a characteristic of the surface (4) and to identify shape deviation points by comparison with an intended characteristic, and a processing unit (32) which is coupled to the first drive device (34) and the surface scanning device (30) and is designed to:
- control the first drive device (34) for moving the carriage (6) along a region of the surface (4),
- control the surface scanning device (30) to scan the surface (4) along the area of the surface (4), and
- detecting identified shape deviation points from the surface scanning device (30) and outputting them correlated with an associated position of the guide device (8) on the rail (10) and/or storing them on a data carrier.

2. The system (2) according to claim 1, further comprising a second drive device (48) coupled to the processing unit (32), which is arranged on the holding frame (24) and is configured to move the surface scanning device (30) along the holding frame (24) if necessary.

3. System (2) according to claim 1 or 2, wherein two or more surface scanning devices (30) are arranged on the holding frame (24) and coupled to the processing unit (32), and wherein the processing unit (32) is configured to control the surface scanning devices (30) alternately to scan successive surface sections.

4. System (2) according to one of the preceding claims, wherein the guide device (8) has a plurality of spaced-apart rollers (22) which lie in a common plane and are each rotatable about an axis which are arranged perpendicular to the common plane, and wherein the rollers (22) are arranged relative to one another in such a way that they are able to grip two opposite longitudinal edges (16) of the rail (10) and to roll along the longitudinal edges (16).

5. System (2) according to one of the preceding claims, wherein the first drive device (34) has at least one gear (44) for engaging in a toothing of the rail (10).

6. System (2) according to one of the preceding claims, wherein the holding frame (24) has at least one support strut (26) which projects from the holding frame (24) and has a roller for support on the surface (4) of the aircraft or spacecraft.

7. System (2) according to one of the preceding claims, further comprising a position detection device, which is designed to detect a current position of the carriage (6) relative to the surface (4), the position detection device being coupled to the processing unit (32).

8. System (2) according to claim 7, wherein the position detection device from a group of position detection devices is selected, the group comprising:
- laser-based distance or position sensors,
- electromechanical position sensors,
- magnet based position sensors,
- in-door-GPS, and
- LiDAR.

9. System (2) according to one of the preceding claims, wherein the guide device (8) is designed to be detached or inserted manually from the rail (10) at any position if necessary.

10. Method for testing a surface (4) of an aircraft or spacecraft, comprising the steps of providing a carriage (6) with a guide device (8) which can be mounted movably along a guide axis in a rail (10) which can be held on the surface (4) of the aircraft or spacecraft, moving the carriage (6) by means of a first drive device (34) which is coupled to the carriage (6) and is designed to engaging the rail (10) to take up a plurality of successive positions along the rail (10), wherein the first drive device (34) is controlled to cover a predetermined movement increment over a short time interval, wherein the first drive device (34) is controlled with position feedback so that a very precise movement increment with little or no overlap of the successively approached surface sections is realized, scanning of a respective surface section located at an instantaneous position by means of a surface scanning device (30), which is arranged on a holding frame (24) attached to the carriage (6) and is designed to detect a characteristic of the surface (4) and to identify shape deviation points by comparison with a provided characteristic, and detecting any shape deviation points identified by the surface scanning device by a processing unit (32), correlating with the instantaneous position of the guide device (8) on the rail (10) and outputting and/or storing on a data carrier.

11. Method of claim 10, further comprising moving the surface scanning device (30) along a transverse axis (50) running transversely to the guide axis by means of a second drive device (48) coupled to the processing unit (32), which is arranged on the holding frame (24).

12. Method according to claim 10 or 11, wherein a plurality of consecutive scans are alternated by two or more surface scanning devices (30), which are arranged on the holding frame (24) and coupled to the processing unit (32).

13. Method according to one of claims 10 to 12, further comprising detecting a current position of the carriage (6) by means of a position detection device coupled to the processing unit (32).

14. Method according to one of claims 10 to 13, wherein during scanning bores and/or rivet connections are scanned and examined for errors.

## Revendications

1. Système (2) pour tester une surface (4) d'un aéronef ou d'un véhicule spatial, comprenant: au moins un chariot (6) avec un dispositif de guidage (8) qui est situé dans une surface (4) de l'aéronef ou du véhicule spatial durable le rail (10) peut être stocké de manière mobile le long d'un axe de guidage, un premier dispositif d'entraînement (34), qui est accouplé au chariot (6) et est conçu pour s'engager dans le rail (10) et pour déplacer le chariot (6) le long du rail (10) si nécessaire, le premier dispositif d'entraînement (34) pour remettre un prédéterminé incrément de mouvement est contrôlé sur un court intervalle de temps, le premier dispositif d'entraînement (34) étant commandé avec un feedback de position, de sorte qu'un incrément de mouvement très précis est réalisé avec un chevauchement faible ou nul des sections de surface abordées successivement, un cadre de maintien (24) disposé sur le chariot (6), qui s'étend transversalement à l'axe de guidage et est espacé du dispositif de guidage (8), au moins un appareil de balayage de surface (30), qui est disposé sur le cadre de maintien (24) et est conçu pour détecter une caractéristique de la surface (4) et la comparer avec une caractéristique prévue points de déviation de forme à identifier, et une unité de traitement (32) avec le premier dispositif d'entraînement (34) et le appareil de balayage de surface (30) est couplé et est conçu pour:
- contrôler le premier dispositif d'entraînement (34) pour déplacer le chariot (6) le long d'une région de la surface (4),
- contrôler l'appareil de balayage de surface (30) pour balayer la surface (4) le long de la région de la surface (4), et
- identifier points de déviation de forme de l'appareil de balayage de surface (30) et l'éditer en corrélation avec une position correspondante du dispositif de guidage (8) sur le rail (10) et/ou le stocker sur un support de données.

2. Système (2) selon la revendication 1, comprenant en outre un deuxième dispositif d'entraînement (48) couplé à l'unité de traitement (32), qui est disposé sur le cadre de maintien (24) et qui est conçu pour déplacer le dispositif de balayage de surface (30) le long du cadre de maintien (24) en fonction des besoins.

3. Système (2) selon la revendication 1 ou 2, dans lequel deux ou plusieurs appareils de balayage de surface (30) sont disposés sur le cadre de maintien (24) et couplés à l'unité de traitement (32), et l'unité de traitement (32) est conçue pour: appareils de balayage de surface (30) alternativement pour scanner les successifs sections de surfaces à contrôler.

4. Système (2) selon l'une des revendications précédentes, dans lequel le dispositif de guidage (8) présente une pluralité de rouleaux (22) espacés qui se trouvent dans un plan commun et peuvent chacun tourner autour d'un axe disposé perpendiculairement au plan commun, et dans lequel les rouleaux (22) sont disposés les uns par rapport aux autres de manière à pouvoir saisir deux bords longitudinaux opposés (16) du rail (10) et rouler le long des bords longitudinaux (16).

5. Système (2) selon l'une des revendications précédentes, dans lequel le premier dispositif d'entraînement (34) comporte au moins un engrenage (44) destiné à s'engager dans une denture du rail (10).

6. Système (2) selon l'une des revendications précédentes, dans lequel le cadre de maintien (24) présente au moins une jambe de support (26) qui dépasse du cadre de maintien (24) et présente un rouleau d'appui sur la surface (4) de l'avion ou du véhicule spatial.

7. Système (2) selon l'une des revendications précédentes, comprenant en outre un dispositif de détection de position, qui est conçu pour détecter une position actuelle du chariot (6) par rapport à la surface (4), le dispositif de détection de position est couplé à l'unité de traitement (32).

8. Système (2) selon la revendication 7, dans lequel le dispositif de détection de position d'un groupe de dispositifs de détection de position est sélectionné, le groupe comprenant :
- des capteurs de distance ou de position à base de laser,
- capteurs de position électromécaniques,
- capteurs de position à base magnétique,
- intérieur-GPS, et
- LiDAR.

9. Système (2) selon l'une des revendications précédentes, dans lequel le dispositif de guidage (8) est conçu pour être détaché ou inséré manuellement du rail (10) dans n'importe quelle position si nécessaire.

10. Procédé d'inspection d'une surface (4) d'un aéronef ou d'un véhicule spatial, comprenant les étapes suivantes: fournir un chariot (6) avec un dispositif de guidage (8) qui peut être monté de manière mobile le long d'un axe de guidage dans un rail (10) pouvant être supporté sur la surface (4) de l'aéronef ou du véhicule spatial, déplacer le chariot (6) au moyen d'un premier dispositif d'entraînement (34) qui est couplé au chariot (6) et qui est conçu pour, s'engager dans le rail (10) pour prendre plusieurs positions successives le long du rail (10), le premier dispositif d'entraînement (34) étant commandé pour parcourir un incrément de mouvement prédéterminé sur un court intervalle de temps, le premier dispositif d'entraînement (34) étant commandé avec un feedback de position, de sorte qu'un incrément de mouvement très précis est réalisé avec un chevauchement faible ou nul des sections de surface abordées successivement, palper respectivement une section de surface se trouvant dans une position momentanée au moyen d'un appareil de balayage de surface (30) qui est disposé sur un cadre de maintien (24) monté sur le chariot (6) et qui est conçu à cet effet, détecter une caractéristique de la surface (4) et identifier des points de déviation de forme par comparaison avec une caractéristique prévue, et détecter d'éventuels points de déviation de forme identifiés par le dispositif de balayage de surface par une unité de traitement (32), corrélation avec la position momentanée du dispositif de guidage (8) sur le rail (10) et sortie et/ou enregistrement sur un support de données.

11. Procédé selon la revendication 10, comprenant en outre le déplacement de l'appareil de balayage de surface (30) le long d'un axe transversal (50) s'étendant transversalement à l'axe de guidage au moyen d'un deuxième dispositif d'entraînement (48) couplé à l'unité de traitement (32) et disposé sur le cadre de maintien (24).

12. Procédé selon la revendication 10 ou 11, dans lequel de multiples balayages consécutifs sont alternés par deux ou plusieurs appareils de balayage de surface (30) sont réalisés, qui sont disposés sur le cadre de maintien (24) et couplés à l'unité de traitement (32).

13. Procédé selon l'une des revendications 10 à 12, comprenant en outre l'acquisition d'une position actuelle du chariot (6) au moyen d'un dispositif d'acquisition de position couplé à l'unité de traitement (32).

14. Procédé selon l'une des revendications 10 à 13, dans lequel pendant le balayage, les alésages et/ou les connexions par rivets sont scannées et examinées pour déceler des erreurs.
